# EUROPEAN PATENT SPECIFICATION

(11) **EP 2 360 028 B1**
(45) Date of publication and mention of the grant of the patent: **19.09.2012**
(21) Application number: 10193456.0
(22) Date of filing: 02.12.2010
(51) Int. Cl.: B60B 1/04, B60B 1/14, B60B 27/02

(54) **Bicycle spoke and hub assembly**
Fahrradspeichen- und -nabenanordnung
Ensemble de rayon et moyeu de bicyclette

(30) Priority: 11.02.2010 TW 099203020 U; 11.02.2010 TW 099104410
(43) Date of publication of application: 24.08.2011
(73) Proprietor: Gigantex Composite Technologies Co., Ltd., Changhua County Beidou Town, Chinese Taipei (CN)
(72) Inventor: Chen, Wu-Hui, Yongjing Township (TW)
(74) Representative: Viering, Jentschura & Partner

(56) References cited:
- EP-A1- 2 008 835
- WO-A1-00/35683
- DE-A1- 3 417 203
- US-A- 3 199 922
- US-A1- 2004 130 204
- US-A1- 2005 067 881

## Description

### Background of the Invention

### 1. Field of the Invention

The present invention relates to a bicycle spoke and hub assembly according to the preamble of claim 1.

### 2. Description of the Related Art

A bicycle spoke and hub assembly of the initially-mentioned type is known, e.g., from WO 00/35683.

Taiwan Patent M246192 discloses a hub with spoke holes. Each spoke hole can be inserted by a spoke of a circular or rhombus cross section. Each spoke has two opposite ends including a first end installed to the spoke holes and a second end installed to a rim. Therefore, the hub and the rim are connected with each other via the spokes. The spokes are adapted for transferring the motive power of a hub, which is applied by a rider, to the rim so that the rim can be driven via the spokes. The spokes are also adapted for being a support between the hub and the rim and bearing the weight of frame and rider. However, the spoke is made of metal and is heavy due to the high density. Further, the spoke is apt to rust so as to increase the maintenance cost.

Referring to Taiwan patent M325932, it discloses a spoke structure. The spoke structure includes a plate made of composite material and a connecting set. The plate has a first end and a second end opposite to first end. The connecting set includes a first connecting element and a second connecting element. Each of the first and second connecting elements is made of metal and has a fixed portion. The fixed portions of first and second connecting elements are installed to the first and second end of the plate, respectively. The connecting set and the plate is steadily connected because that the fixed portion has a larger connecting area to increase the tension thereof.

One end of each spoke structure is inserted through the spoke hole and the head portion of the spoke structure abuts against one end of the spoke hole. The spoke structure produces a tensile force while the wheel rotates. A stress concentration is caused on the spoke hole where the head portion of the spoke structure abuts. The hub may be cracked because of the stress concentration. Moreover, the other end of each spoke structure connects to the rim so that the stress applied by the rim is transferred to the hub via the other end of each spoke. The distance of each spoke will be different with each other while accumulating a long period. Hence, the smoothness of operating the rim is affected.

The present invention is, therefore, intended to obviate or at least alleviate the problems encountered in the prior art.

### Summary of the Invention

The invention provides a bicycle spoke and hub assembly according to claim 1. Further embodiments of the invention are described in the dependent claims.

An advantage of the bicycle spoke and hub assembly according to the present invention is that stress applied on the spoke will be dissipated on the seat because the first portion is integrally formed on the outer surface of the seat.

Another advantage of the bicycle spoke and hub assembly according to the present invention is that each second portion is spaced from the other one; as a result, the second portions dissipate the stress applied on the rim.

Another advantage of the bicycle spoke and hub assembly according to the present invention is that each second portion and the first portion have a distance therebetween to keep the distance between the rim and the hub so that the smoothness of operating is improved.

A further advantage of the bicycle spoke and hub assembly according to the present invention is that each edge abuts against the related lateral face so that the hub can sustain shear force applied thereon.

Other advantages and features of the present invention will become apparent from the following description referring to the drawings.

### Brief Description of the Drawings

The embodiments of Figs. 8-11 and 16-19 as such do not form embodiments of the invention, but serve explaining aspects of the invention.
Fig. 1 is a perspective view of a bicycle spoke and hub assembly according to a first embodiment of the present invention.
Fig. 2 is a partial, enlarged view of Fig. 1.
Fig. 3 is an exploded perspective view of the bicycle spoke and hub assembly of Fig. 2.
Fig. 4 is a partial, enlarged view of the bicycle spoke and hub assembly according to a second embodiment of the present invention.
Fig. 5 is an exploded perspective view of the bicycle spoke and hub assembly of Fig. 4.
Fig. 6 is another exploded perspective view of the bicycle spoke and hub assembly of Fig. 4.
Fig. 7 is a cross-section view taken along line 7-7 of Fig. 4.
Fig. 8 is a partial, enlarged view of the bicycle spoke and hub assembly according to an embodiment.
Fig. 9 is an exploded perspective view of the bicycle spoke and hub assembly of Fig. 8.
Fig. 10 is another exploded perspective view of the bicycle spoke and hub assembly of Fig. 8.
Fig. 11 is a cross-section view taken along line 11-11 of Fig. 8.
Fig. 12 is a partial, enlarged view of the bicycle spoke and hub assembly according to a third embodiment of the present invention.
Fig. 13 is an exploded perspective view of the bicycle spoke and hub assembly of Fig. 12.
Fig. 14 is another exploded perspective view of the bicycle spoke and hub assembly of Fig. 12.
Fig. 15 is a cross-section view taken along line 15-15 of Fig. 12.
Fig. 16 is a partial, enlarged view of the bicycle spoke and hub assembly according to an embodiment.
Fig. 17 is a partial, enlarged view of the bicycle spoke and hub assembly according to an embodiment.
Fig. 18 is an exploded perspective view of the bicycle spoke and hub assembly of Fig. 17.
Fig. 19 is another exploded perspective view of the bicycle spoke and hub assembly of Fig. 17.

### Detailed Description of the Preferred Embodiment

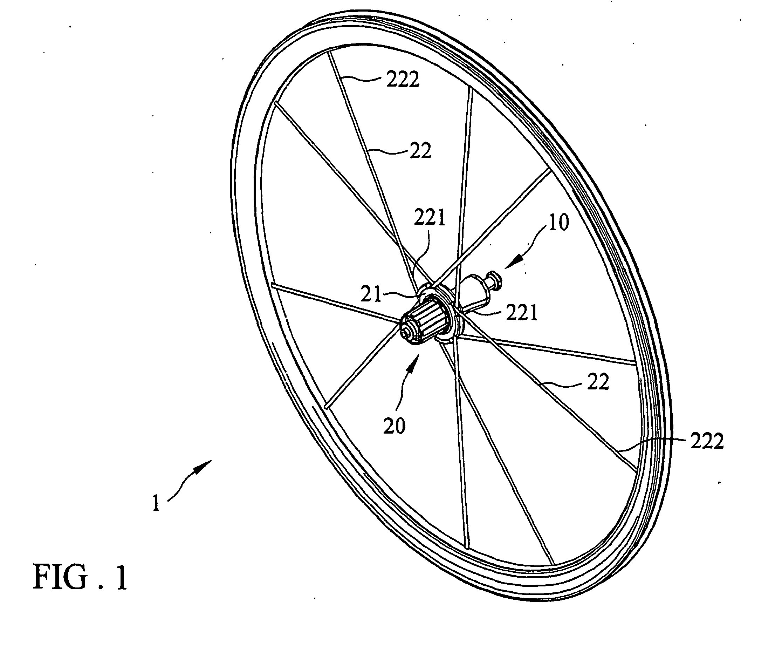

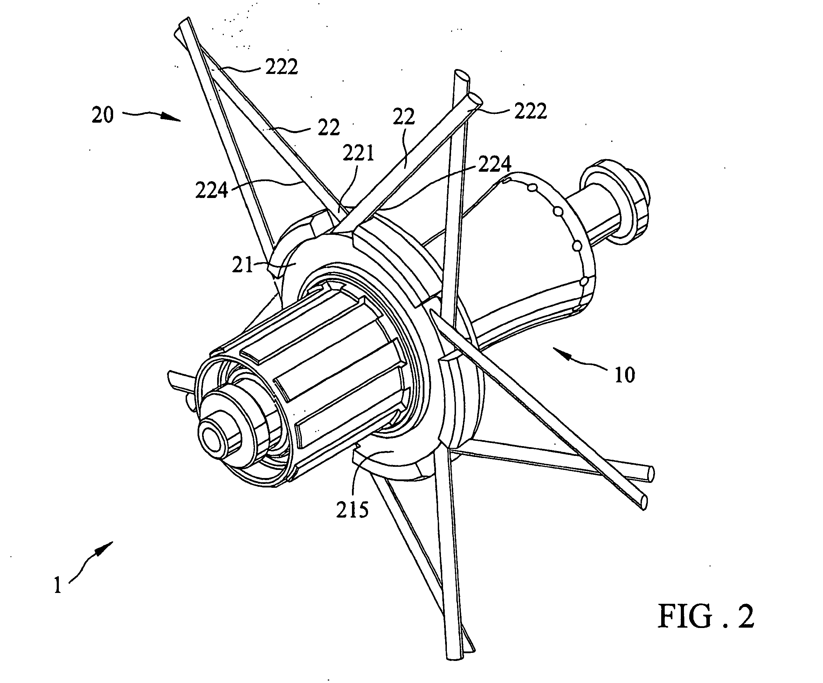

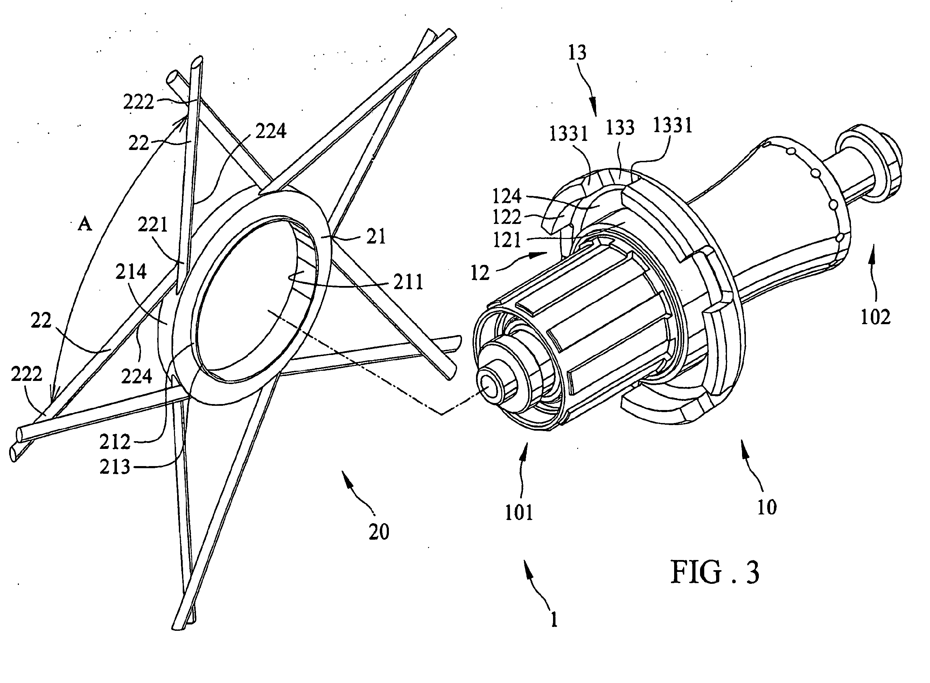

Referring to Fig. 1 to Fig. 3, there is shown a bicycle spoke and hub assembly 1 according to a first embodiment of the present invention, the bicycle spoke and hub assembly 1 comprises a hub 10 and a connected device 20.

The hub 10 has two opposing ends including a first end 101 and a second end 102. The first end 101 of the hub 10 has an installing portion 12 and a retaining portion 13 formed thereon. Preferably, the installing portion 12 is a compartment. The installing portion 12 extends alone a longitudinal axis of the hub 10 and has an opening distal from the second end 102 of the hub 10. The installing portion 12 includes a first inner wall 121, a second inner wall 122 and a bottom wall 124 extended between the first and second inner walls 121, 122. The bottom wall 124 of the installing portion 12 is perpendicular to the longitudinal axis of the hub 10. The installing portion 12 is delimited by the first inner wall 121, the second inner wall 122 and the bottom wall 124. The retaining portion 13 is disposed on the outer periphery of the hub 10 and is in communication with the installing portion 12. The retaining portion 13 includes at least one recess 133, and the recess 133 is in communication with the installing portion 12 and has two lateral faces 1331. Preferably, each lateral face 1331 is perpendicular to the bottom wall 124.

The connected device 20 can be made of composite material or aluminum. The connected device 20 includes a seat 21 and at least one spoke 22 extended from the seat 21. The seat 21 and the spoke 22 are made of one piece. Preferably, the seat 21 is a bushing having a mounting portion 211 extending therethrough. The seat 21 of the connected device 20 is installed to the installing portion 12 in an adhesive manner so as to keep the seat 21 from disengaging from the installing portion 12. The mounting portion 211 is mounted on the first inner wall 121 of the installing portion 12. The second inner wall 122 of the installing portion 12 is mounted on an outer surface 214 of the seat 21. The seat 21 is restricted between the first inner wall 121 and the second inner wall 122 so as to prevent the seat 21 from moving with respect to the hub 10. The seat 21 has a protruded area 212 extended toward the bottom wall 124 of the hub 10 and disposed in the installing portion 12. The protruded area 212 has a proximal face 213 adjacent to the bottom wall 124 of the installing portion 12 and abutted against the bottom wall 124 of the installing portion 12 so as to prevent the seat 21 from moving toward the second end 102 of the hub 10. The seat 21 further has a distal face 215 distal from the proximal face 213. Preferably, the distal face 215 is parallel to the proximal face 213.

The spoke 22 includes a first portion 221 integrally formed on the seat 21 and at least two second portions 222 installed to a rim (not labeled). The second portions 222 are extended from the first portion 221. The stress applied on the spoke 22 will be dissipated on the seat 21 because the first portion 221 is integrally formed on the outer surface 214 of the seat 21. The stress concentration will not be caused between the seat 21 and the spoke 22. Two of the second portions 222 and the first portion 221 have an angle A so that the spoke 22 is substantially V-shaped. Each second portion 222 is spaced from the other one; as a result, the second portions 222 dissipate the stress applied on the rim. Further, each second portion 222 and the first portion 221 have a distance therebetween to keep the distance between the rim and the hub 10 so that the smoothness of operating is improved. The spoke 22 inserts through the recess 133 of the retaining portion 13 and is retained via the recess 133. The spoke 22 has two edges 224 corresponding to the lateral faces 1331, respectively. Each edge 224 abuts against the related lateral face 1331 so that the hub 10 can sustain the shear force applied thereon. Preferably, the connected device 20 includes a plurality of spokes 22 equally distributed on the outer surface 214 of the seat 21. All the spokes 22 and the seat 21 are integrally formed as a single to dissipate the stress applied on the seat 21.

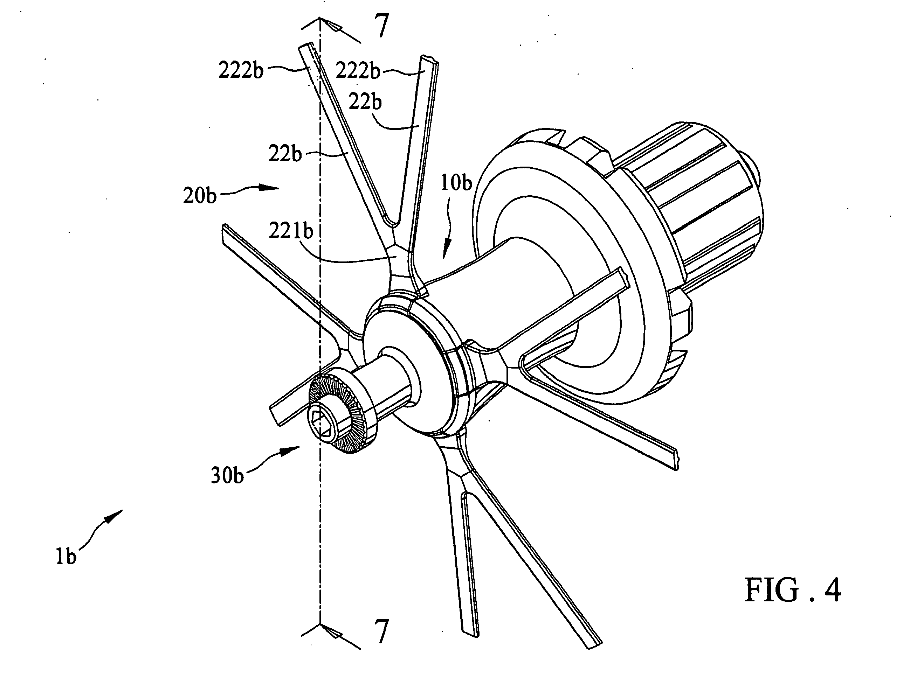

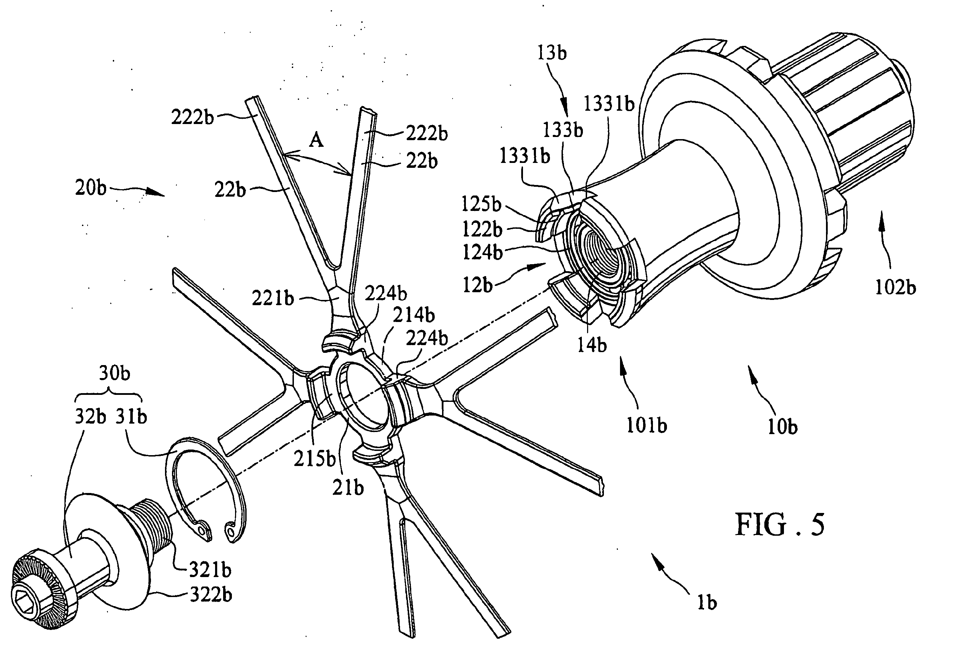

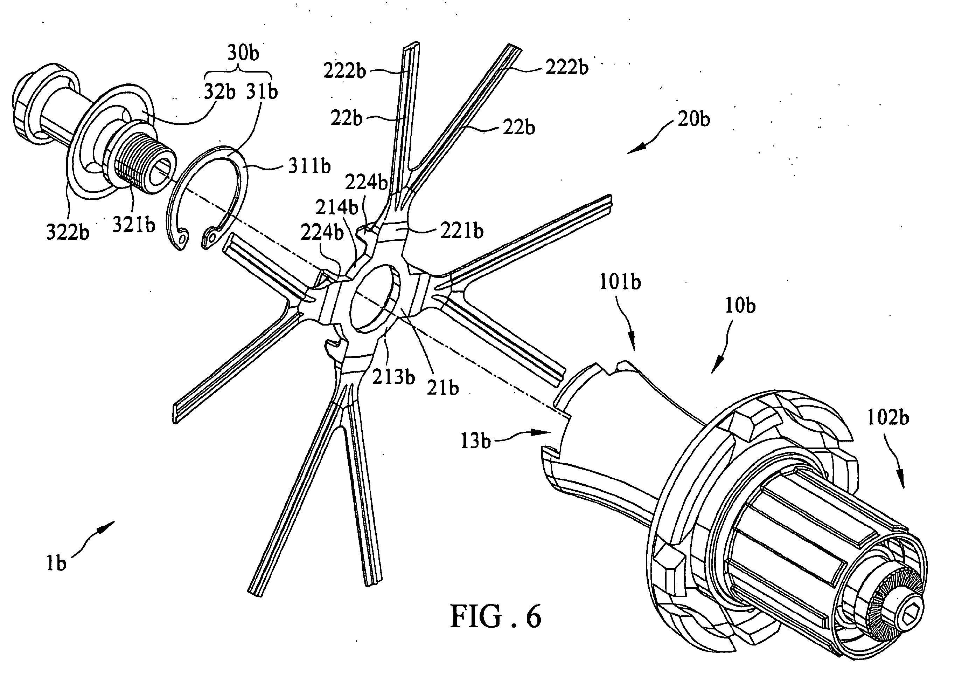

Referring to Fig. 4 to Fig. 6, there is shown a bicycle spoke and hub assembly 1b according to a second embodiment of the present invention. The second embodiment is like the first embodiment except that the bicycle spoke and hub assembly 1b further comprises a locking device 30b installed to the first end 101 b of the hub 10b. Preferably, the first end 101 b of the hub 10b has a holding portion 14b formed thereon. The holding portion 14b extends toward the second end 102b of the hub 10b and alone the longitudinal axis of the hub 10b. The second inner wall 122b of the installing portion 12b has a limiting portion 125b formed thereon, in a preferred form, the limiting portion 125b is a groove. The seat 21b has a proximal face 213b adjacent to the bottom wall 124b of the installing portion 12b. The locking device 30b includes a positioning element 31b and a fastener 32b. The positioning element 31 b has a first face 311 b adjacent to the bottom wall 124b of the installing portion 12b. Preferably, the holding portion 14b is a screw hole and the fastener 32b is a screw. The fastener 32b has a thread portion 321b on one end thereof and a flange 322b on the other end thereof distal from the thread portion 321b. The thread portion 321b corresponds to the holding portion 14b. The flange 322b can prevent dust falling into the installing portion 12b.

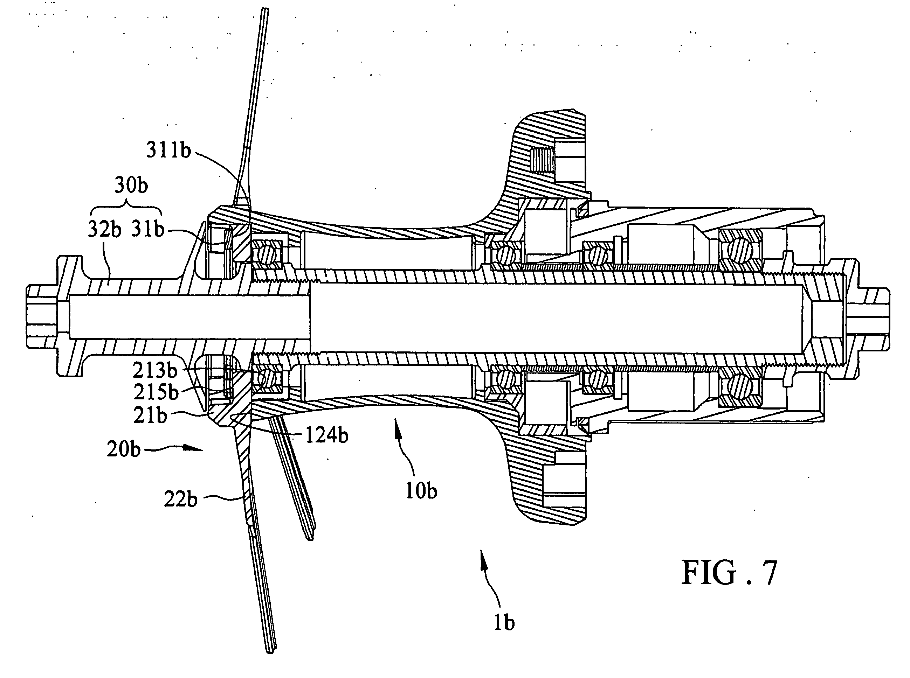

Referring to Fig. 7, the mounting portion 211 b is mounted on the first inner wall 121b of the installing portion 12b. The second inner wall 122b of the installing portion 12b is mounted on an outer surface 214b of the seat 21b. The seat 21 b is restricted between the first inner wall 121 b and the second inner wall 122b so as to prevent the seat 21 b from moving with respect to the hub 10b. The proximal face 213b is abutted against the bottom wall 124b of the installing portion 12b so as to prevent the seat 21 b from moving toward the second end 102b of the hub 10b. The positioning element 31b is installed to the limiting portion 125b of the installing portion 12b. The first face 311b of the positioning element 31b abuts against the distal face 215b of the seat 21 b so as to prevent the seat 21 b disengaging from the installing portion 12b. The fastener 32b is installed to the holding portion 14b via the thread portion 321b.

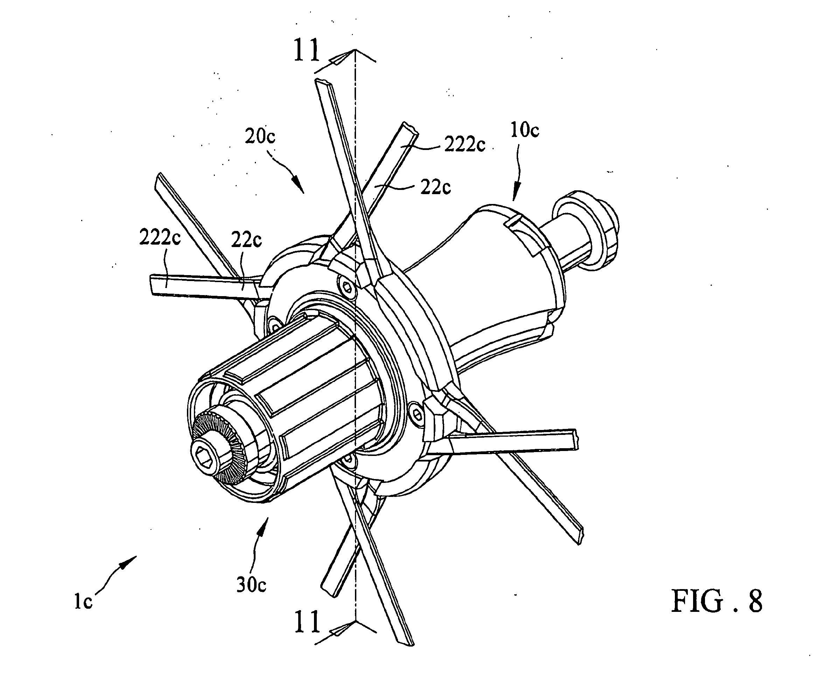

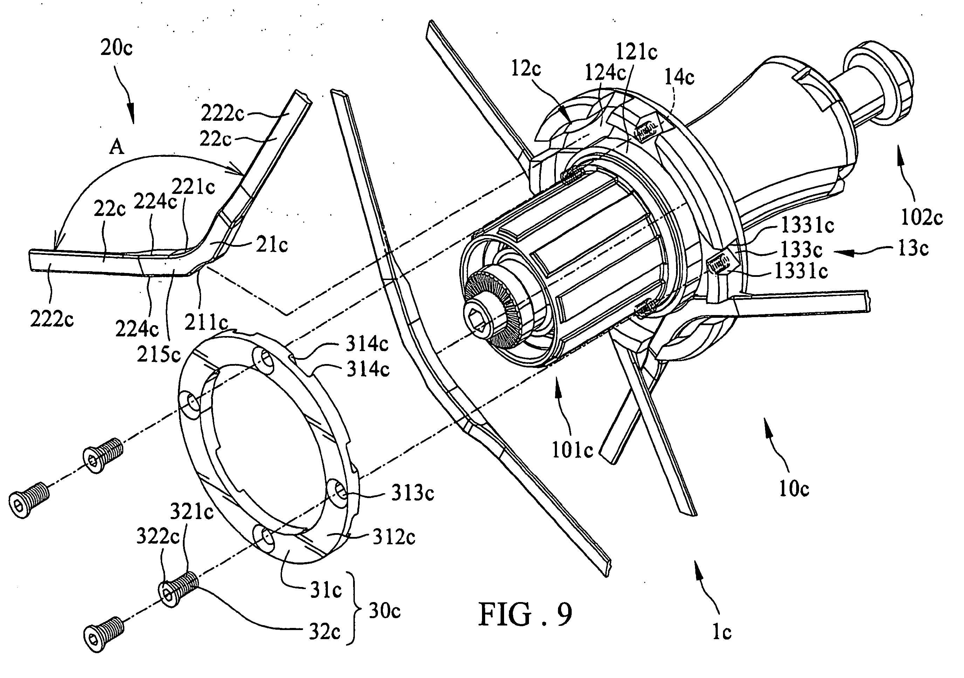

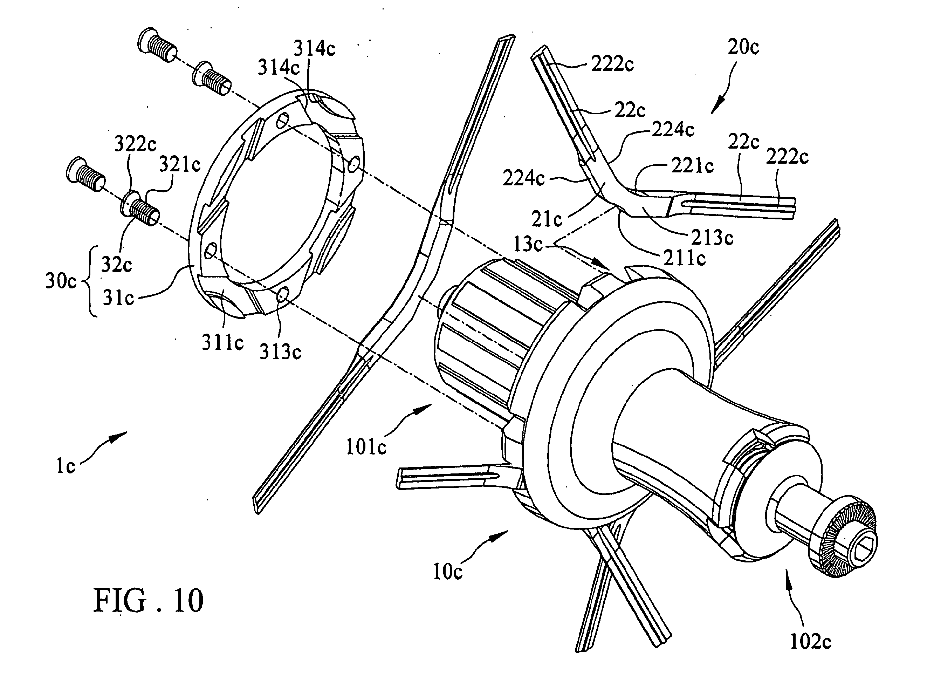

Referring to Fig. 8 to Fig. 10, there is shown a bicycle spoke and hub assembly 1c according to an embodiment. This embodiment is like the first embodiment except that the bicycle spoke and hub assembly 1c comprises a plurality of connected device 20c and a locking device 30c. The bottom wall 124c of the installing portion 12c has at least one holding portion 14c formed thereon. The holding portion 14c extends toward the second end 102c of the hub 10c and alone the longitudinal axis of the hub 10c. Each connected device 20c includes a seat 21 c and a spoke 22c integrally formed on the seat 2 1 c. The seat 2 1 c is substantially arched and has a proximal face adjacent to the bottom wall 124c of the installing portion 12c. The locking device 30c includes a positioning element 31c and a fastener 32c. The positioning element 31c has a first face 311c adjacent to the bottom wall 124c of the installing portion 12c and a second face 312c opposite to the first face 311c. The first face 311 c is parallel to the second face 312c. The positioning element 31c further includes at least one through hole 313c and at least two retaining walls 314c. The through hole 313c extends from the first face 311 c to the second face 312c and corresponds to the holding portion 14c. The retaining walls 314c are formed on the first face 311 c of the positioning element 31c and correspond to the edges 224c of the spoke 22c, respectively. Preferably, the holding portion 14c is a screw hole and the fastener 32c is a screw. The fastener 32c has a thread portion 321c on one end thereof and a flange 322c on the other end thereof distal from the thread portion 321c. The thread portion 321c corresponds to the holding portion 14c. The flange 322c is adapted for abutting the second face 312c of the positioning element 31c. The retaining wall 314c is perpendicular to the first face 311. Each edge 224c abuts against the related retaining wall 314c so that the hub 10c can sustain the shear force applied thereon.

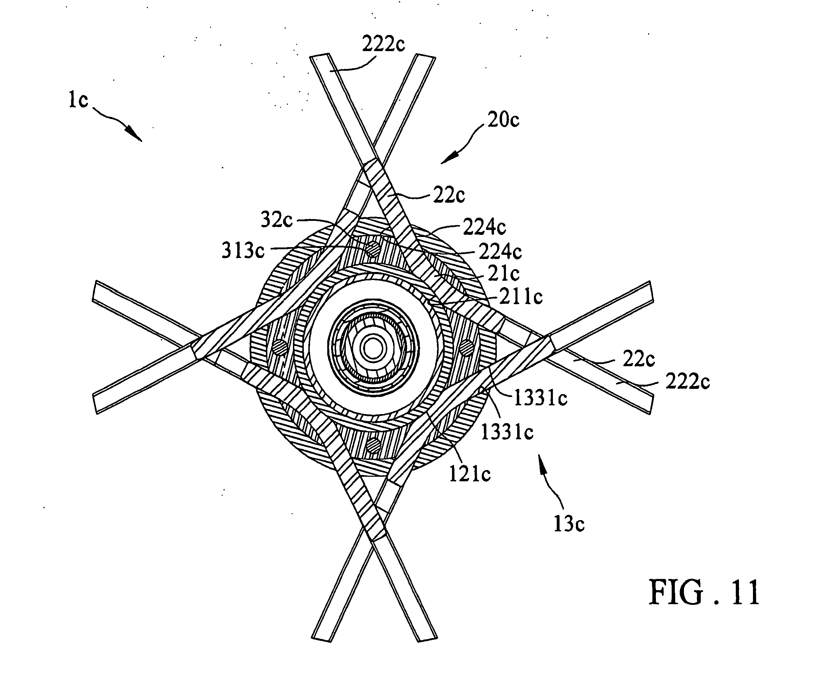

Referring to Fig. 11, the connected devices 20c are disposed in the installing portion 12c, and the mounting portion 211 c of the seat 21c abuts the first inner wall 121 c of the hub 10c. The spoke 22c inserts through the recess 133c of the retaining portion 13c and is retained via the recess 133c. The proximal face 213c is abutted against the bottom wall 124c of the installing portion 12c so as to prevent the seat 21 c from moving toward the second end 102c of the hub 10c. The positioning element 31 c is installed to the installing portion 12c. The first face 311c of the positioning element 31c abuts against the distal face 215c of the seat 21 c so as to prevent the seat 21 c disengaging from the installing portion 12c. The fastener 32c is installed to the holding portion 14c via the thread portion 32 1 c. In addition, the flange 322c abuts the second face 312c of the positioning element 31c so as to prevent the positioning element 31c from disengaging from the installing portion 12c.

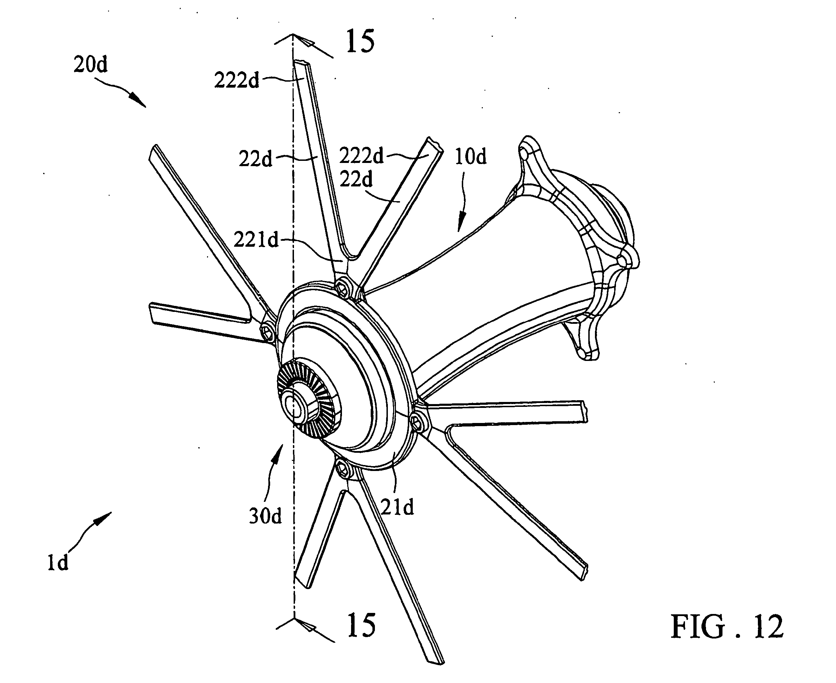

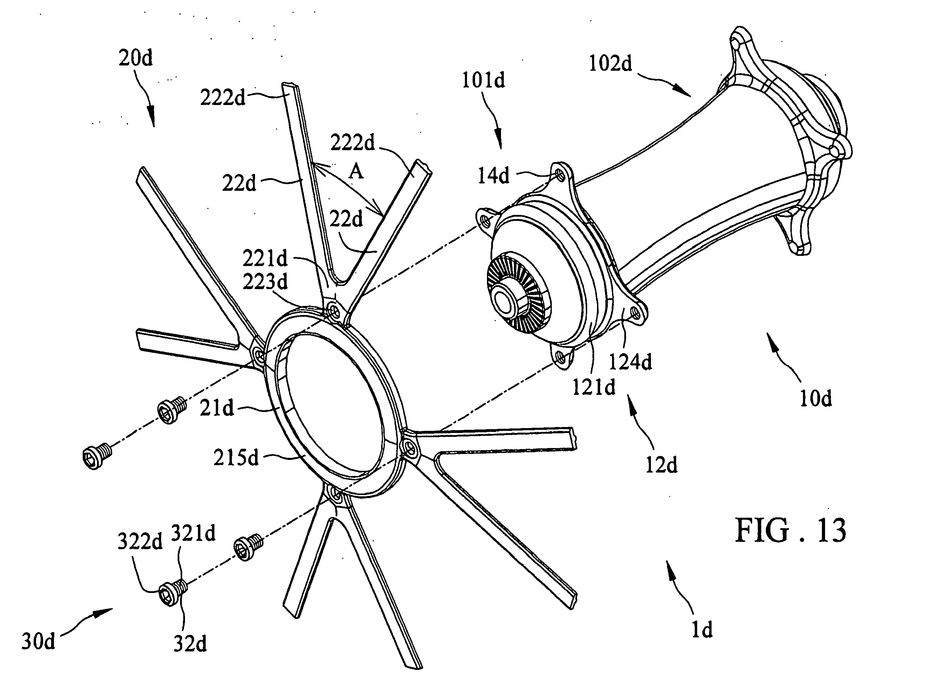

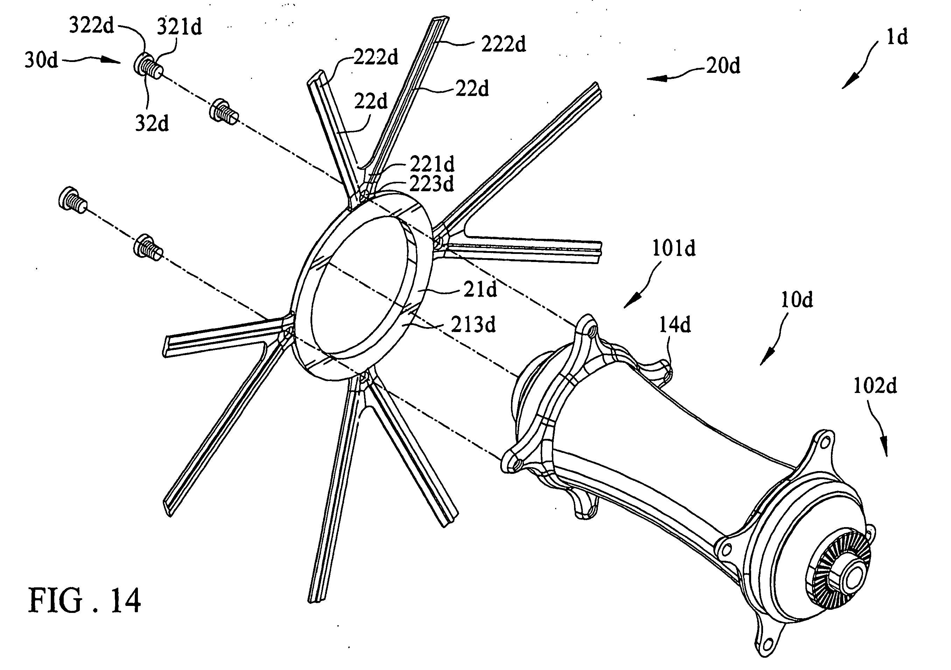

Referring to Fig. 12 to Fig. 14, there is shown a bicycle spoke and hub assembly 1d according to a third embodiment of the present invention. The third embodiment is like the first embodiment except that the bicycle spoke and hub assembly 1d further comprises a locking device 30d. The first portion 221d of the spoke 22d has an aperture 223d formed thereon. The bottom wall 124d of the installing portion 12d has a holding portion 14d formed thereon. The holding portion 14d corresponds to the aperture 223d. The holding portion 14d extends toward the second end 102d of the hub 10d and alone the longitudinal axis of the hub 10d. The seat 21d has a proximal face 213d adjacent to the bottom wall 124d of the installing portion 12d. The locking device 30d includes a fastener 32d corresponding to the holding portion 14d. Preferably, the holding portion 14d is a screw hole and the fastener 32d is a screw. The fastener 32d has a thread portion 321d on one end thereof and a flange 322d on the other end thereof distal from the thread portion 321d. The thread portion 321d corresponds to the holding portion 14d. The flange 322d is adapted for abutting the first portion 221d of the spoke 22d. Preferably, the connected device 20d has four apertures 223d, the installing portion 12d has four holding portions 14d corresponding to the four apertures 223d, and the locking device 30d has four fasteners 32d.

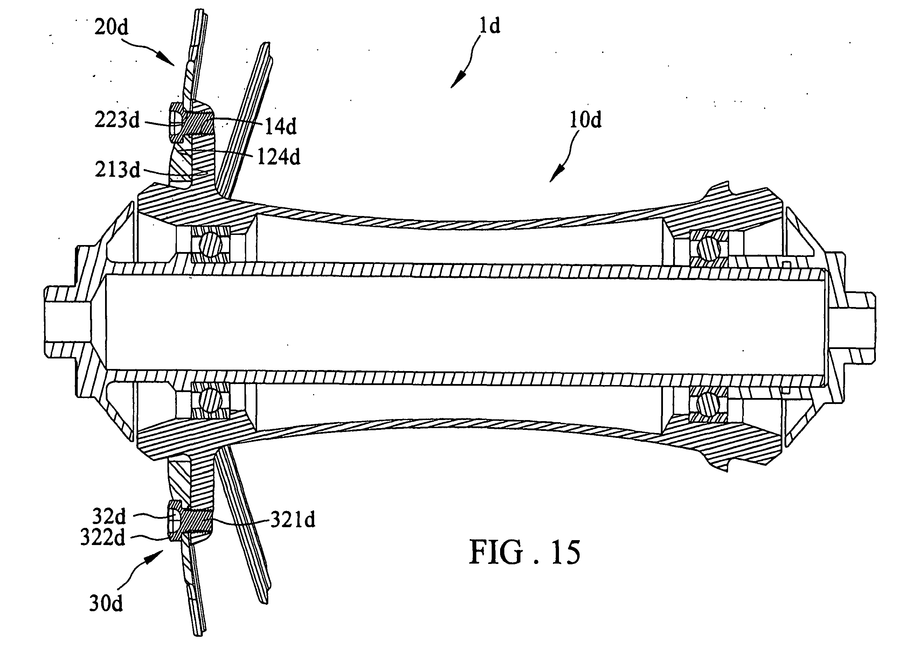

Referring to Fig. 15, the seat 21d of the connected device 20d is installed to the installing portion 12d. The proximal face 213d is abutted against the bottom wall 124d of the installing portion 12d so as to prevent the seat 21d from moving toward the second end 102d of the hub 10d. The fastener 32d is installed to the holding portion 14d via the thread portion 321d. In addition, the flange 322d abuts the first portion 221d of the spoke 22d so as to prevent the connected device 20d from disengaging from the installing portion 12d.

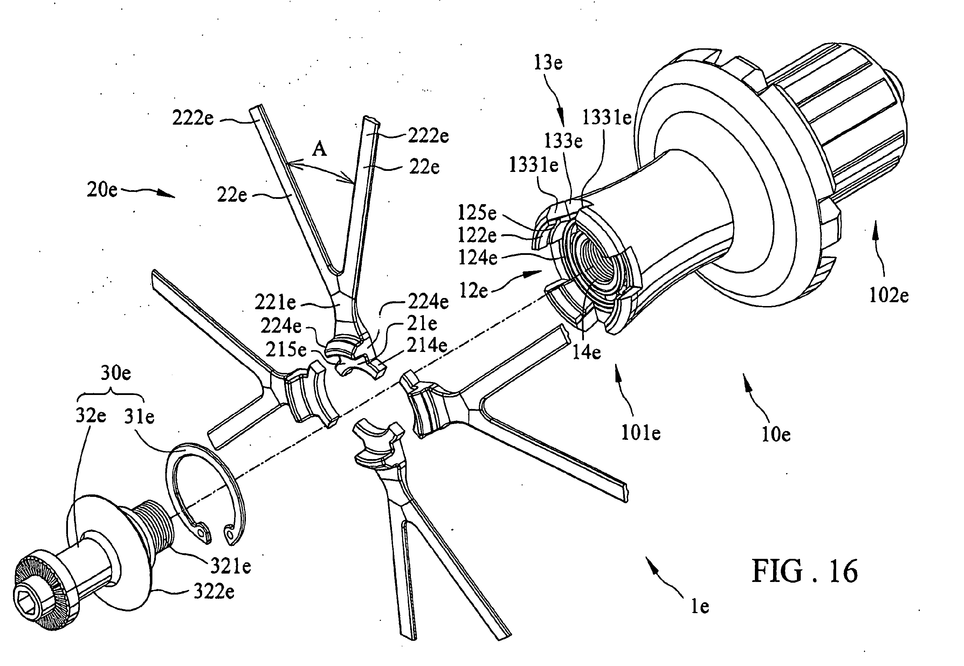

Referring to Fig. 16, there is shown a bicycle spoke and hub assembly 1e according to an embodiment. This embodiment is like the first embodiment except that the bicycle spoke and hub assembly 1e comprises a plurality of connected device 20e. The spoke 22e and the seat 21e of each connected device 20e are integrally formed. The seat 21e of each connected device 20e is substantially arched. Preferably, the seats 21e are abutted with each other and are installed to the installing portion 12e jointly.

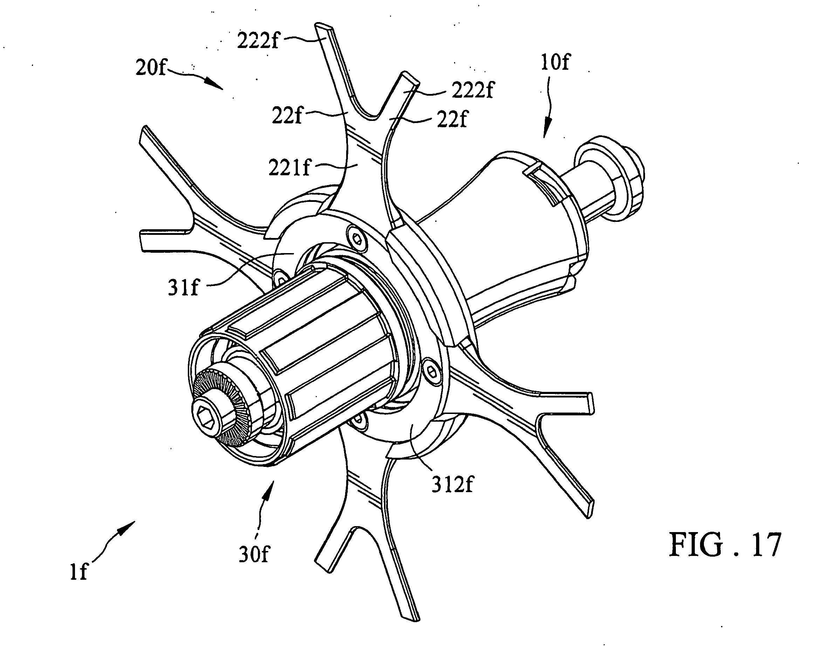

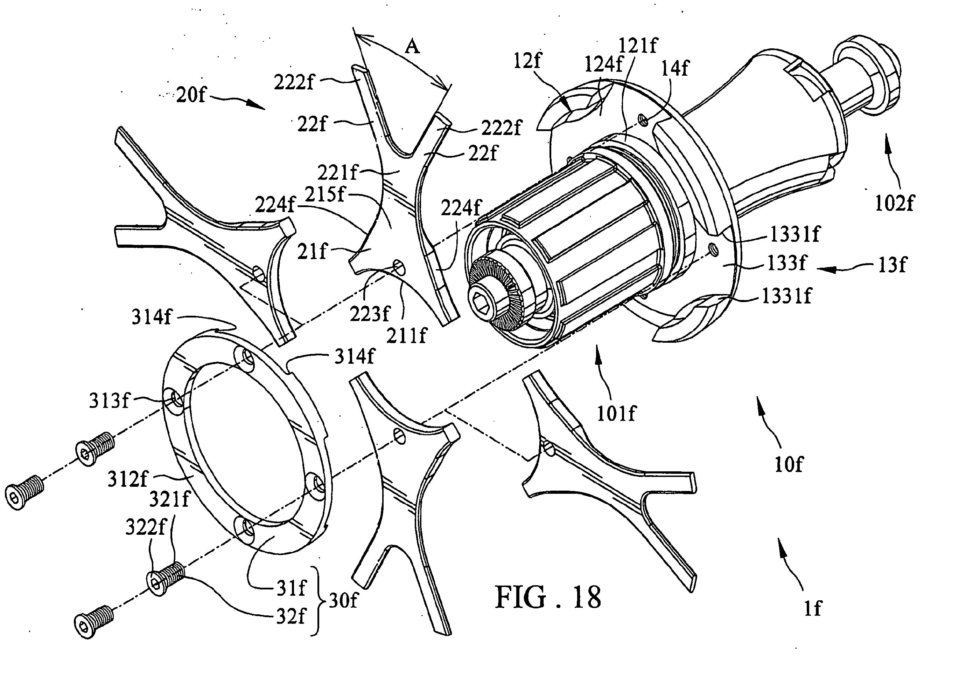

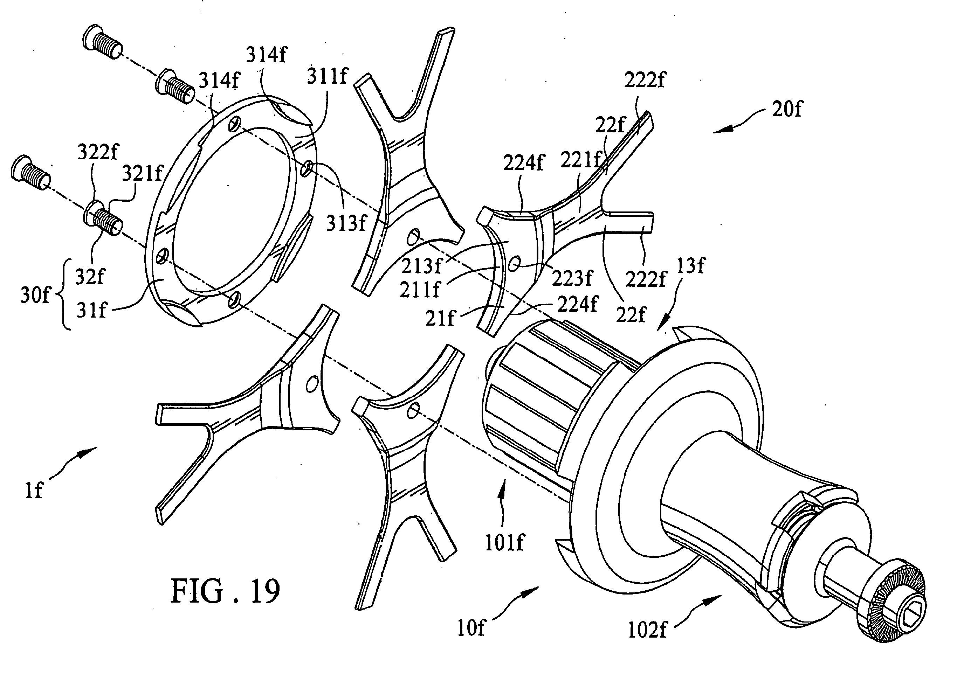

Referring to Fig. 17 to Fig. 19, there is shown a bicycle spoke and hub assembly 1f according to an embodiment. This embodiment is like the first embodiment except that the bicycle spoke and hub assembly 1f comprises a plurality of connected device 20f and a locking device 30f. The seat 21f of each connected device 20f is substantially arched. Preferably, the seats 21f are abutted with each other and are installed to the installing portion 12f jointly. The first portion 221f of the spoke 22fhas an aperture 223f formed therein. The bottom wall 124f of the installing portion 12f has a holding portion 14f formed thereon. The holding portion 14f corresponds to the aperture 223 f. The holding portion 14f extends toward the second end 102f of the hub 10f and alone the longitudinal axis of the hub 10f. The seat 21f has a proximal face 213f adjacent to the bottom wall 124f of the installing portion 12f. The locking device 30f includes a positioning element 31f and a fastener 32f. The positioning element 31f has a first face 311 f adjacent to the bottom wall 124f of the installing portion 12f and a second face 312f opposite to the first face 311 f. The first face 311 f is parallel to the second face 312f. The positioning element 31f further includes a through hole 313f and two retaining walls 314f. The through hole 313f extends from the first face 311 f to the second face 312f and corresponds to the holding portion 14f. The retaining walls 314f are formed on the first face 311f of the positioning element 31f and correspond to the edges 224f of the spoke 22f, respectively. Preferably, the holding portion 14f is a screw hole and the fastener 32f is a screw. The fastener 32f has a thread portion 321f on one end thereof and a flange 322f on the other end thereof distal from the thread portion 321f. The thread portion 321f corresponds to the holding portion 14f. The flange 322f is adapted for abutting the second face 312f of the positioning element 31f. Preferably, the connected device 20f has four apertures 223f, the installing portion 12f has four holding portions 14f corresponding to the four apertures 223f, and the locking device 30f has four fasteners 32f. The retaining wall 314f is perpendicular to the first face 311f. Each edge 224f abuts against the related retaining wall 314f so that the hub 10f can sustain the shear force applied thereon.

## Claims

1. A bicycle spoke and hub assembly (1,1b, 1d) comprising:
a hub (10,10b,10d) having two opposing ends including a first end (101,101b,101d) and a second end (102,102b,102d,), wherein the first end (101,101b, 101 d) of the hub (10,10b,10d) has an installing portion (12,12b, 12d), with the installing portion (12,12b, 12d) having an opening distal from the second end (102,102b, 102d) of the hub (10,10b, 10d); and **characterized by**
only one connected device (20,20b,20d) including a seat (21,21b,21d) and a plurality of spokes (22,22b,22d) extended from and equally distributed on the outer surface of the seat (21,21 b, 21 d), wherein the seat (21,21b,21d) and all the spoke (22,22b, 22d) are made of one piece and integrally formed as a single, with the seat (21,21b,21d) of the connected device (20,20b, 20d) installed to the installing portion (12, 12b, 12d), wherein the spoke (22,22b, 22d) includes a first portion (221,221b, 221d) integrally formed on the seat (21,21b, 21d) and at least two second portions (222,222b, 222d) installed to a rim, with the second portions (222,222b, 222d) extended from the first portion (221,221b, 221 d), wherein the stress applied on the spoke (22,22b, 22d) is dissipated on the seat (21,21b, 21d) because the first portion (221,221b, 221 d) is integrally formed on an outer surface (214,214b, 214d) of the seat (21,21b, 21d), wherein stress concentration is not caused between the seat (21,21b, 21d) and the spoke (22,22b, 22d).

2. The bicycle spoke and hub assembly (1,1b,1d) as claimed in claim 1, wherein the installing portion (12,12b,12d) includes a bottom wall (124,124b,124d), wherein the seat (21,21b, 21d) has a proximal face (213,213b, 213d) adjacent to the bottom wall (124,124b, 124d) of the installing portion (12,12b, 12d) and abutted against the bottom wall (124,124b, 124d) of the installing portion (12,12b, 12d) so as to prevent the seat (21,21b, 21d) from moving toward the second end (102,102b, 102d) of the hub (10,10b, 10d).

3. The bicycle spoke and hub assembly (1,1b) as claimed in claim 1, wherein the first end (101,101b) of the hub (10,10b) includes a retaining portion (13,13b) formed thereon, wherein the retaining portion (13,13b) includes at least one recess (133,133b), with the recess (133,133b) in communication with the installing portion (12,12b), wherein the spoke (22,22b) is inserted through the recess (133,133b) of the retaining portion (13,13b) and retained via the recess (13,13b).

4. The bicycle spoke and hub assembly (1) as claimed in claim 1, wherein the installing portion (12) includes a first inner wall (121), wherein the seat (21) has a mounting portion (211), wherein the mounting portion (211) is mounted on the first inner wall (121) of the installing portion (12) so as to prevent the seat (21) from moving with respect to the hub (10).

5. The bicycle spoke and hub assembly (1b) as claimed in claim 1, wherein the installing portion (12b) includes a second inner wall (122b), wherein the second inner wall (122b) of the installing portion (12b) is mounted on an outer surface (214b) of the seat (21b), so as to prevent the seat (21 b) from moving with respect to the hub (10b).

6. The bicycle spoke and hub assembly (1b) as claimed in claim 5 further comprising a locking device (30b) installed to the first end (101b) of the hub (10b), wherein the first end (101b) of the hub (10b) has a limiting portion (125b) formed thereon, wherein the seat (21b) has a proximal face (213b) adjacent to the bottom wall (124b) of the installing portion (12b) and abutted against the bottom wall (124b) of the installing portion (12b) so as to prevent the seat (21b) from moving toward the second end (102b) of the hub (10b), wherein the seat (21 b) further has a distal face (215b) distal from the proximal face (213b), wherein the locking device (30b) includes a positioning element (31b) and a fastener (32b), wherein the positioning element (31b) has a first face (311b) adjacent to the bottom wall (124b) of the installing portion (12b), wherein the positioning element (31b) is installed to the limiting portion (125b) of the installing portion (12b), wherein the first face (311b) of the positioning element (31b) abuts against the distal face (215b) of the seat (21b) so as to prevent the seat (21b) disengaging from the installing portion (12b).

7. The bicycle spoke and hub assembly (1d) as claimed in claim 1 further comprising a locking device (30d), wherein the first portion (221d) of the spoke (22d) has an aperture (223d) formed thereon, wherein the bottom wall (124d) of the installing portion (12d) has a holding portion (14d) formed thereon, with the holding portion (14d) corresponding to the aperture (223d), wherein the locking device (30d) includes a fastener (32d) corresponding to the holding portion (14d).

8. The bicycle spoke and hub assembly (1d) as claimed in claim 7, wherein the fastener (32d) has a thread portion (321d) on one end thereof and a flange (322d) on the other end thereof distal from the thread portion (321d), with the thread portion (321d) corresponding to the holding portion (14d), wherein the flange (322d) is adapted for abutting the first portion (221d) of the spoke (22d).

9. The bicycle spoke and hub assembly (1,1b) as claimed in claim 3, wherein the recess (133,133b) has two lateral faces (1331,1331b), wherein the spoke (22,22b) has two edges (224,224b) corresponding to the lateral faces (1331,1331b) respectively, with each edge (224,224b) abuts against the related lateral face (1331,1331b) so that the hub (10, 10b) can sustain shear force applied thereon.

10. The bicycle spoke and hub assembly (1,1b) as claimed in claim 9, wherein the installing portion (12,12b) includes a bottom wall (124,124b) perpendicular to a longitudinal axis of the hub (10,10b), with each lateral face (1331,1331b) perpendicular to the bottom wall (124,124b).

11. The bicycle spoke and hub assembly (1,1b) as claimed in claim 1, wherein two of the second portions (222,222b, 222d) and the first portion (221,221b, 221d) have an angle (A), wherein each second portion (222,222b, 222d) is spaced from the other one, wherein the second portions (222,222b,222d) dissipate the stress applied on the rim.

12. The bicycle spoke and hub assembly (1,1b,1d) as claimed in claim 1, wherein each second portion (222,222b,222d) and the first portion (221,221b, 221d) have a distance therebetween to keep the distance between the rim and the hub (10,10b,10d) so that the smoothness of operating is improved.

## Patentansprüche

1. Eine Fahrrad-Speichen- und Nabeneinrichtung (1, 1b, 1d), aufweisend:
eine Nabe (10, 10b, 10d), die zwei einander entgegengesetzte Enden aufweist, die ein erstes Ende (101, 101b, 101d) und ein zweites Ende (102, 102b, 102d) miteinschließen, wobei das erste Ende (101, 101b, 101d) der Nabe (10, 10b, 10d) einen Installationsabschnitt (12, 12b, 12d) aufweist, wobei der Installationsabschnitt (12, 12b, 12d) eine zu dem zweiten Ende (102, 102b, 102d) der Nabe (10, 10b, 10d) distale Öffnung aufweist, und
nur eine Anschlusseinrichtung (20, 20b, 20d), aufweisend eine Aufnahme (21, 21b, 21d) und eine Mehrzahl von Speichen (22, 22b, 22d), die sich von der Außenfläche der Aufnahme (21, 21b, 21d) aus erstecken und gleichmäßig auf dieser verteilt sind, **dadurch gekennzeichnet, dass**
die Aufnahme (21, 21b, 21d) und sämtliche Speichen (22, 22b, 22d) aus einem Stück hergestellt sind und einstückig als ein einzelnes Element ausgebildet sind, wobei die Aufnahme (21, 21b, 21d) der Anschlusseinrichtung (20, 20b, 20d) an dem Installationsabschnitt (12, 12b, 12d) installiert ist, wobei die Speiche (22, 22b, 22d) aufweist: einen ersten Abschnitt (221, 221b, 221d), der einstückig an der Aufnahme (21, 21b, 21d) ausgebildet ist, und mindestens zwei zweite Abschnitte (222, 222b, 222d), die an einer Felge montiert sind, wobei sich die zweiten Abschnitte (222, 222b, 222d) von dem ersten Abschnitt (221, 221b, 221d) aus erstrecken, wobei die Spannung, die auf die Speiche (22, 22b, 22d) aufgebracht wird, an der Aufnahme (21, 21b, 21d) abgeführt wird, da der erste Abschnitt (221, 221b, 221d) einstückig an einer Außenfläche (214, 214b, 214d) der Aufnahme (21, 21b, 21d) ausgebildet ist, wobei zwischen der Aufnahme (21, 21b, 21d) und der Speiche (22, 22b, 22d) keine Spannungskonzentration bewirkt wird.

2. Die Fahrrad-Speichen- und Nabeneinrichtung (1, 1b, 1d) gemäß Anspruch 1, wobei der Installationsabschnitt (12, 12b, 12d) eine untere Wand (124, 124b, 124d) aufweist, wobei die Aufnahme (21, 21b, 21d) eine proximale Fläche (213, 213b, 213d) benachbart zu der unteren Wand (124, 124b, 124d) des Installationsabschnitts (12, 12b, 12d) und an die untere Wand (124, 124b, 124d) des Installationsabschnitts (12, 12b, 12d) anstoßend aufweist, um zu verhindern, dass sich die Aufnahme (21, 21b, 21d) in Richtung zu dem zweiten Ende (102, 102b, 102d) der Nabe (10, 10b, 10d) bewegt.

3. Die Fahrrad-Speichen- und Nabeneinrichtung (1, 1b) gemäß Anspruch 1, wobei das erste Ende (101, 101b) der Nabe (10, 10b) einen Halteabschnitt (13, 13b) aufweist, der daran ausgebildet ist, wobei der Halteabschnitt (13, 13b) mindestens eine Aussparung (133, 133b) aufweist, wobei die Aussparung (133, 133b) mit dem Installationsabschnitt (12, 12b) kommuniziert, wobei die Speiche (22, 22b) durch die Aussparung (133, 133b) des Halteabschnitts (13, 13b) hindurch eingesetzt ist und über die Aussparung (13, 13b) gehalten wird.

4. Die Fahrrad-Speichen- und Nabeneinrichtung (1) gemäß Anspruch 1, wobei der Installationsabschnitt (12) eine erste Innenwand (121) aufweist, wobei die Aufnahme (21) einen Montageabschnitt (211) aufweist, wobei der Montageabschnitt (211) an der ersten Innenwand (121) des Installationsabschnitts (12) montiert ist, um zu verhindern, dass sich die Aufnahme (21) bezüglich der Nabe (10) bewegt.

5. Die Fahrrad-Speichen- und Nabeneinrichtung (1b) gemäß Anspruch 1, wobei der Installationsabschnitt (12b) eine zweite Innenwand (122b) aufweist, wobei die zweite Innenwand (122b) des Installationsabschnitts (12b) an einer Außenfläche (214b) der Aufnahme (21b) montiert ist, um zu verhindern, dass sich die Aufnahme (21b) bezüglich der Nabe (10b) bewegt.

6. Die Fahrrad-Speichen- und Nabeneinrichtung (1b) gemäß Anspruch 5, ferner aufweisend eine Verriegelungsvorrichtung (30b), die an dem ersten Ende (101b) der Nabe (10b) installiert ist, wobei das erste Ende (101b) der Nabe (10b) einen Begrenzungsabschnitt (125b) aufweist, der daran ausgebildet ist, wobei die Aufnahme (21b) eine proximale Fläche (213b) benachbart zu der unteren Wand (124b) des Installationsabschnitts (12b) und an die untere Wand (124b) des Installationsabschnitts (12b) anstoßend aufweist, um zu verhindern, dass sich die Aufnahme (21b) in Richtung zu dem zweiten Ende (102b) der Nabe (10b) bewegt, wobei die Aufnahme (21b) ferner eine distale Fläche (215b) distal zu der proximalen Fläche (213b) aufweist, wobei die Verriegelungsvorrichtung (30b) ein Positionierelement (31b) und ein Befestigungselement (32b) aufweist, wobei das Positionierelement (31b) eine erste Fläche (311b) benachbart zu der unteren Wand (124b) des Installationsabschnitts (12b) aufweist, wobei das Positionierelement (31b) an dem Begrenzungsabschnitt (125b) des Installationsabschnitts (12b) installiert ist, wobei die erste Fläche (311b) des Positionierelements (31b) an die distale Fläche (215b) der Aufnahme (21b) anstößt, um zu verhindern, dass die Aufnahme (21b) mit dem Installationsabschnitt (12b) außer Eingriff gelangt.

7. Die Fahrrad-Speichen- und Nabeneinrichtung (1d) gemäß Anspruch 1, ferner aufweisend eine Verriegelungsvorrichtung (30d), wobei der erste Abschnitt (221d) der Speiche (22d) eine daran ausgebildete Öffnung (223d) aufweist, wobei die untere Wand (124d) des Installationsabschnitts (12d) einen Halteabschnitt (14d) aufweist, der daran ausgebildet ist, wobei der Halteabschnitt (14d) mit der Öffnung (223d) korrespondiert, wobei die Verriegelungsvorrichtung (30d) ein Befestigungselement (32d) aufweist, das mit dem Halteabschnitt (14d) korrespondiert.

8. Die Fahrrad-Speichen- und Nabeneinrichtung (1d) gemäß Anspruch 7, wobei das Befestigungselement (32d) einen Gewindeabschnitt (321d) an einem Ende davon und einen Flansch (322d) an dem anderen Ende davon distal zu dem Gewindeabschnitt (321d) aufweist, wobei der Gewindeabschnitt (321d) mit dem Halteabschnitt (14d) korrespondiert, wobei der Flansch (322d) angepasst ist, um an den ersten Abschnitt (221d) der Speiche (22d) anzustoßen.

9. Die Fahrrad-Speichen- und Nabeneinrichtung (1, 1b) gemäß Anspruch 3, wobei die Aussparung (133, 133b) zwei seitliche Flächen (1331, 1331b) aufweist, wobei die Speiche (22, 22b) zwei Ränder (224, 224b) aufweist, die jeweils mit den seitlichen Flächen (1331, 1331b) korrespondieren, wobei jeder Rand (224, 224b) an die zugehörige seitliche Fläche (1331, 1331b) anstößt, so dass die Nabe (10, 10b) eine darauf aufgebrachte Scherkraft aufnehmen kann.

10. Die Fahrrad-Speichen- und Nabeneinrichtung (1, 1b) gemäß Anspruch 9, wobei der Installationsabschnitt (12, 12b) eine untere Wand (124, 124b) senkrecht zu einer Längsachse der Nabe (10, 10b) aufweist, wobei jede seitliche Fläche (1331, 1331b) senkrecht zu der unteren Wand (124, 124b) ist.

11. Die Fahrrad-Speichen- und Nabeneinrichtung (1, 1b) gemäß Anspruch 1, wobei zwei von den zweiten Abschnitten (222, 222b, 222d) und der erste Abschnitt (221, 221b, 221d) einen Winkel (A) aufweisen, wobei jeder zweite Abschnitt (222, 222b, 222d) im Abstand von dem anderen angeordnet ist, wobei die zweiten Abschnitte (222, 222b, 222d) die auf die Felge aufgebrachte Spannung ableiten.

12. Die Fahrrad-Speichen- und Nabeneinrichtung (1, 1b, 1d) gemäß Anspruch 1, wobei jeder zweite Abschnitt (222, 222b, 222d) und der erste Abschnitt (221, 221b, 221d) einen Abstand dazwischen aufweisen, um den Abstand zwischen der Felge und der Nabe (10, 10b, 10d) aufrechtzuerhalten, so dass die Laufruhe verbessert ist.

## Revendications

1. Ensemble de moyeu et de rayons de bicyclette (1, 1 b, 1 d) comprenant :
un moyeu (10, 10b, 10d) qui présente deux extrémités opposées comprenant une première extrémité (101, 101b, 101d) et une seconde extrémité (102, 102b, 102d,), dans lequel la première extrémité (101, 10 1 b, 101d) du moyeu (10, 10b, 10d) présente une partie d'installation (12, 12b, 12d), la partie d'installation (12, 12b, 12d) présentant une ouverture distale de la seconde extrémité (102, 102b, 102d) du moyeu (10, 10b, 10d) ; et
un seul dispositif connecté (20, 20b, 20d) qui comprend une embase (21, 21b, 21d) et une pluralité de rayons (22, 22b, 22d) s'étendant à partir de la surface extérieure de l'embase (21, 21b, 21d) et répartis de manière régulière sur celle-ci, **caractérisé en ce que** :
l'embase (21, 21b, 21d) et tous les rayons (22, 22b, 22d) sont constitués d'un seul tenant et formés d'une seule pièce, l'embase (21, 21b, 21d) du dispositif connecté (20, 20b, 20d) étant installée sur la partie d'installation (12, 12b, 12d), dans lequel les rayons (22, 22b, 22d) comprennent une première partie (221, 221b, 221d) formée d'une pièce sur l'embase (21, 21b, 21d) et au moins deux deuxièmes parties (222, 222b, 222d) installées sur une jante, les deuxièmes parties (222, 222b, 222d) s'étendant à partir de la première partie (221, 221b, 221d), dans lequel les contraintes appliquées sur les rayons (22, 22b, 22d) sont dissipées sur l'embase (21, 21b, 21d) étant donné que la première partie (221, 221b, 221 d) est formée d'une pièce sur une surface extérieure (214, 214b, 214d) de l'embase (21, 21b, 21d), dans lequel aucune concentration de contraintes n'est provoquée entre l'embase (21, 21b, 21d) et les rayons (22, 22b, 22d).

2. Ensemble de moyeu et de rayons de bicyclette (1, 1b, 1d) selon la revendication 1, dans lequel la partie d'installation (12, 12b, 12d) comprend une paroi inférieure (124, 124b, 124d), dans lequel l'embase (21, 21b, 21d) présente une face proximale (213, 213b, 213d) adjacente à la paroi inférieure (124, 124b, 124d) de la partie d'installation (12, 12b, 12d) et mise en butée contre la paroi inférieure (124, 124b, 124d) de la partie d'installation (12, 12b, 12d) afin d'empêcher l'embase (21, 21b, 21d) de se déplacer vers la seconde extrémité (102, 102b, 102d) du moyeu (10, 10b, 10d).

3. Ensemble de moyeu et de rayons de bicyclette (1, 1b) selon la revendication 1, dans lequel la première extrémité (101, 101b) du moyeu (10, 10b) comprend une partie de retenue (13, 13b) formée dessus, laquelle partie de retenue (13, 13b) comprend au moins un renfoncement (133, 133b), le renfoncement (133, 133b) étant en communication avec la partie d'installation (12, 12b), dans lequel les rayons (22, 22b) sont insérés à travers le renfoncement (133, 133b) de la partie de retenue (13, 13b) et retenus par l'intermédiaire du renfoncement (13, 13b).

4. Ensemble de moyeu et de rayons de bicyclette (1) selon la revendication 1, dans lequel la partie d'installation (12) comprend une première paroi intérieure (121), dans lequel l'embase (21) présente une partie de montage (211), laquelle partie de montage (211) est montée sur la première paroi intérieure (121) de la partie d'installation (12) afin d'empêcher l'embase (21) de se déplacer par rapport au moyeu (10).

5. Ensemble de moyeu et de rayons de bicyclette (1b) selon la revendication 1, dans lequel la partie d'installation (12b) comprend une seconde paroi intérieure (122b), laquelle seconde paroi intérieure (122b) de la partie d'installation (12b) est montée sur une surface extérieure (214b) de l'embase (21b) afin d'empêcher l'embase (21b) de se déplacer par rapport au moyeu (10b).

6. Ensemble de moyeu et de rayons de bicyclette (1b) selon la revendication 5, comprenant en outre un dispositif de verrouillage (30b) installé sur la première extrémité (101b) du moyeu (10b), dans lequel la première extrémité (101b) du moyeu (10b) présente une partie de limitation (125b) formée dessus, dans lequel l'embase (21b) présente une face proximale (213b) adjacente à la paroi inférieure (124b) de la partie d'installation (12b) et mise en butée contre la paroi inférieure (124b) de la partie d'installation (12b) afin d'empêcher l'embase (21b) de se déplacer vers la seconde extrémité (102b) du moyeu (10b), dans lequel l'embase (21b) présente en outre une face distale (215b) distale de la face proximale (213b), dans lequel le dispositif de verrouillage (30b) comprend un élément de positionnement (31b) et un dispositif de fixation (32b), dans lequel l'élément de positionnement (31b) présente une première face (311b) adjacente à la paroi inférieure (124b) de la partie d'installation (12b), dans lequel l'élément de positionnement (31b) est installé sur la partie de limitation (125b) de la partie d'installation (12b), dans lequel la première face (311b) de l'élément de positionnement (31 b) vient en butée contre la face distale (215b) de l'embase (21b) afin d'empêcher l'embase (21b) de se dégager de la partie d'installation (12b).

7. Ensemble de moyeu et de rayons de bicyclette (1d) selon la revendication 1, comprenant en outre un dispositif de verrouillage (30d), dans lequel la première partie (221d) d'un rayon (22d) présente une ouverture (223d) formée dessus, dans lequel la paroi inférieure (124d) de la partie d'installation (12d) présente une partie de retenue (14d) formée dessus, la partie de retenue (14d) correspondant à l'ouverture (223d), dans lequel le dispositif de verrouillage (30d) comprend un dispositif de fixation (32d) qui correspond à la partie de retenue (14d).

8. Ensemble de moyeu et de rayons de bicyclette (1d) selon la revendication 7, dans lequel le dispositif de fixation (32d) présente une partie de filetage (321d) sur une première extrémité de celui-ci et une bride (322d) sur l'autre extrémité de celui-ci, distale de la partie de filetage (321d), la partie de filetage (321d) correspondant à la partie de retenue (14d), dans lequel la bride (322d) est adaptée pour venir en butée avec la première partie (221d) du rayon (22d).

9. Ensemble de moyeu et de rayons de bicyclette (1, 1b) selon la revendication 3, dans lequel le renfoncement (133, 133b) présente deux faces latérales (1331, 1331b), dans lequel les rayons (22, 22b) présentent deux bords (224, 224b) qui correspondent aux faces latérales (1331, 1331b) respectivement, chaque bord (224, 224b) venant en butée contre la face latérale concernée (1331, 1331b) afin que le moyeu (10, 10b) puisse supporter une force de cisaillement appliquée dessus.

10. Ensemble de moyeu et de rayons de bicyclette (1, 1b) selon la revendication 9, dans lequel la partie d'installation (12, 12b) comprend une paroi inférieure (124, 124b) perpendiculaire à l'axe longitudinal du moyeu (10, 10b), chaque face latérale (1331, 1331b) étant perpendiculaire à la paroi inférieure (124, 124b).

11. Ensemble de moyeu et de rayons de bicyclette (1, 1b) selon la revendication 1, dans lequel deux des deuxièmes parties (222, 222b, 222d) et la première partie (221, 221 b, 221 d) forment un angle (A), dans lequel chaque deuxième partie (222, 222b, 222d) est espacée de l'autre, dans lequel les deuxièmes parties (222, 222b, 222d) dissipent les contraintes appliquées sur la jante.

12. Ensemble de moyeu et de rayons de bicyclette (1, 1b, 1d) selon la revendication 1, dans lequel chaque deuxième partie (222, 222b, 222d) et la première partie (221, 221b, 221d) présentent entre elles une distance de façon à maintenir la distance entre la jante et le moyeu (10, 10b, 10d), afin d'améliorer la régularité du fonctionnement.
